# EUROPEAN PATENT SPECIFICATION

(11) **EP 3 546 180 B1**
(45) Date of publication and mention of the grant of the patent: **03.11.2021**
(21) Application number: 19163585.3
(22) Date of filing: 19.03.2019
(51) Int. Cl.: B29C 45/76

(54) **INJECTION MOLDING MACHINE MANAGEMENT SYSTEM**
SPRITZGIESSMASCHINENVERWALTUNGSSYSTEM
SYSTÈME DE GESTION DE MACHINE DE MOULAGE PAR INJECTION

(30) Priority: 29.03.2018 JP 2018065241
(43) Date of publication of application: 02.10.2019
(73) Proprietor: Sumitomo Heavy Industries, Ltd., Tokyo 141-6025 (JP)
(72) Inventor: ABE, Masahiro, Chiba-shi, Chiba, 263-0001 (JP)
(74) Representative: Louis Pöhlau Lohrentz

(56) References cited:
- EP-A1- 1 393 880
- JP-A- 2002 132 324
- JP-A- 2006 110 765
- US-A1- 2015 290 853
- US-B1- 8 827 674

## Description

### BACKGROUND OF THE INVENTION

### Field of the Invention

The present invention relates to an injection molding machine management system.

### Description of Related Art

Japanese Unexamined Patent Publication No. 2002-086531 discloses a system for monitoring, managing, and controlling a molding machine that connects an injection molding machine to a host computer with a communication cable, and is capable of transmitting various kinds of data from the injection molding machine to the host computer. US 8 827 674 B1 and JP 2006 110765 A each disclose a system for monitoring an injection molding machine.

United States Patent Publication US 2015/290853 A1 discloses an injection molding machine with a signal lamp capable of displaying an operation state of the injection molding machine .

Japanese Publication JP 2002 132324 A deals with the problem that the operation state of production facilities can become abnormal.

European Patent Application EP 1 393 880 A1 discloses a molding machine managing system wherein information is exchanged between a portable information terminal and a managing apparatus by a radio machine.

### SUMMARY OF THE INVENTION

However, in a case where communication is performed between the injection molding machine and the host computer in a wired manner, since there is a need to lay the communication cable, there is a problem in that equipment cost increases. Furthermore, even in a case where communication is performed between the injection molding machine and the host computer in a wireless manner, there is a concern that communication cannot be suitably performed due to electromagnetic noise or wave interference caused when the injection molding machine, a device accompanied by the injection molding machine, or the like operates.

Accordingly, an object of the present invention is to provide an injection molding machine management system that acquires an operation state of an injection molding machine with a simple configuration.

An injection molding machine management system is provided according to claim 1.

According to the present invention, it is possible to provide the injection molding machine management system that acquires the operation state of the injection molding machine with a simple configuration.

### BRIEF DESCRIPTION OF THE DRAWINGS

Fig. 1 is a configuration schematic view of an injection molding machine management system according to an embodiment.
Fig. 2 is a functional block diagram of a control unit of an injection molding machine.
Fig. 3 is a diagram showing an example of a setting screen that is displayed on a display unit of the injection molding machine.
Fig. 4 is a diagram showing an example of a setting screen that is displayed on the display unit of the injection molding machine.
Fig. 5 is a functional block diagram of a host management device.
Fig. 6 is a flowchart of signal lamp control processing that is executed by the control unit of the injection molding machine.
Fig. 7 is a flowchart of management processing that is executed by a control unit of the host management device.
Fig. 8 is a diagram showing an example of a display screen that is displayed on a display unit of the host management device.

### DETAILED DESCRIPTION OF THE INVENTION

Hereinafter, a mode for carrying out the present invention will be described referring to the drawings. In the drawings, the same or corresponding configurations are represented by the same or corresponding reference numerals and description will not be repeated.

### Injection Molding Machine Management System

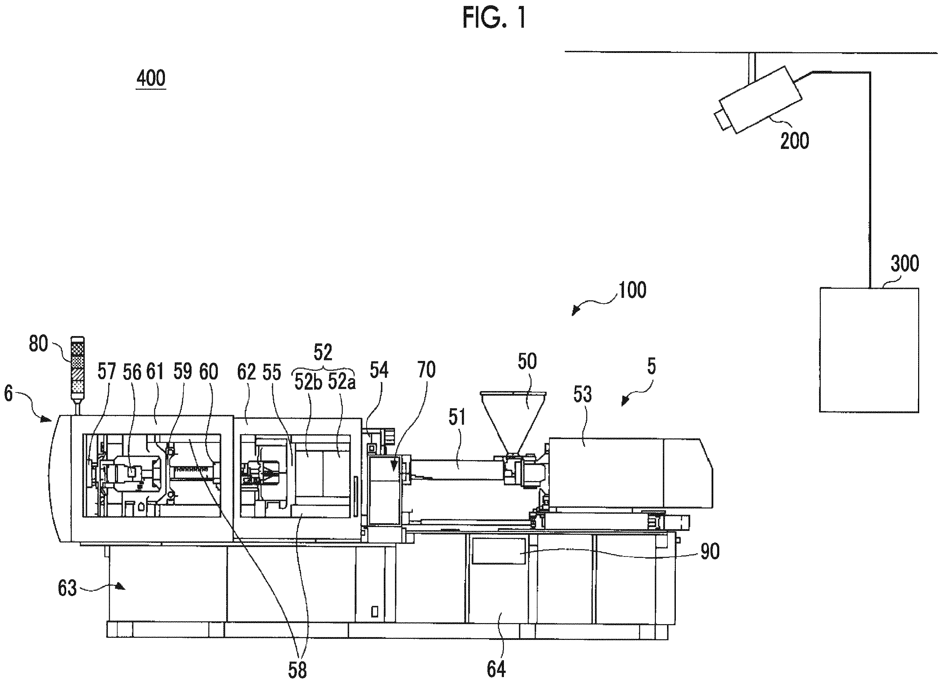

An injection molding machine management system 400 according to an embodiment will be described referring to Fig. 1. Fig. 1 is a configuration schematic view of the injection molding machine management system 400 according to the embodiment.

As shown in Fig. 1, the injection molding machine management system 400 includes an injection molding machine 100, a camera device 200, and a host management device 300.

### Injection Molding Machine

Referring to Fig. 1, the injection molding machine 100 primarily includes an injection molding unit constituted of an injection unit 5 and a mold clamping unit 6, an input and display panel unit 70, a signal lamp 80, and a control unit 90.

The injection unit 5 melts and plasticizes resin to be supplied through a hopper 50 inside an injection cylinder 51 under temperature control of a heater (not shown) . Specifically, the injection unit 5 rotates a screw (not shown) inside the injection cylinder 51 with a plasticizing motor (not shown) and feeds molten resin to a tip portion of the injection cylinder 51.

The injection unit 5 injects molten resin fed to the tip portion of the injection cylinder 51 into a cavity space (not shown) inside the mold unit 52. Specifically, the injection unit 5 moves the screw toward the tip portion of the injection cylinder 51 in an axial direction with an injection motor (not shown) provided inside the injection cover 53 and injects molten resin from the tip portion of the injection cylinder 51 into the cavity space. The mold unit 52 is constituted of a stationary mold 52a attached to a stationary platen 54 and a movable mold 52b attached to a movable platen 55. The cavity space is formed by bringing the movable mold 52b into contact with the stationary mold 52a.

The mold clamping unit 6 executes a mold opening and closing operation and a mold clamping operation. Specifically, the mold clamping unit 6 converts rotary motion of the mold clamping motor 57 to linear motion with a motion conversion mechanism 56, such as a ball screw mechanism. Then, the mold clamping unit 6 moves the movable platen 55 along a tie bar 58 to approach the stationary platen 54 and brings the movable mold 52b into contact with the stationary mold 52a.

Thereafter, the mold clamping unit 6 increases force in a mold clamping direction from the motion conversion mechanism 56 with a booster mechanism 59, such as a toggle mechanism and presses the movable mold 52b to the stationary mold 52a with greater force. In this state, the injection unit 5 injects molten resin fed to the tip portion of the injection cylinder 51 into the cavity space inside the mold unit 52.

Thereafter, after a predetermined time has elapsed and molten resin inside the cavity space has been cooled and solidified, the mold clamping unit 6 moves the movable platen 55 along the tie bar 58 to be away from the stationary platen 54 and separates the movable mold 52b from the stationary mold 52a.

Thereafter, the mold clamping unit 6 makes an ejector pin (not shown) protrude inside the movable mold 52b with an ejector motor 60 and ejects solidified resin (molding product) from the movable mold 52b.

The motion conversion mechanism 56, the mold clamping motor 57, the booster mechanism 59, the ejector motor 60, and the like are accommodated inside a fixed safety cover 61. This is because access of an operator is restricted from a viewpoint of prevention against danger. The mold unit 52 is accommodated inside a sliding safety cover 62. This is because the operator is allowed to easily perform a work, such as mold replacement. Specifically, the operator slides the sliding safety cover 62 in a left direction of the drawing to accommodate the sliding safety cover 62 inside the fixed safety cover 61 and exposes the periphery of the mold unit 52.

The injection unit 5 and the mold clamping unit 6 are provided on a frame 63 at a height where the operator easily performs a work. The frame 63 includes an accommodation portion 64 in which the control unit 90 is accommodated.

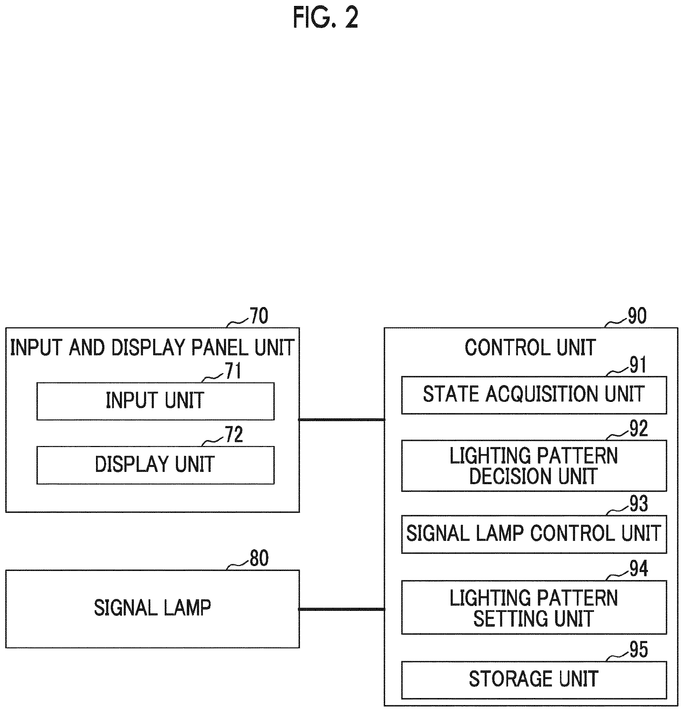

As shown in Fig. 2 described below, the input and display panel unit 70 includes an input unit 71 and a display unit 72. The input unit 71 is connected to the control unit 90, receives an input operation of the operator, and outputs a signal according to the input operation to the control unit 90. The display unit 72 displays an operation screen according to the input operation in the input unit 71 under the control of the control unit 90. The operator operates the input unit 71 while viewing the operation screen displayed on the display unit 72, thereby performing setting (including an input of set values) of the injection molding machine 100, or the like. The input and display panel unit 70 is constituted of, for example, a touch panel, and the input unit 71 and the display unit 72 may be integrated or may be provided independently.

The signal lamp 80 is turned on, turned off, or blinks under the control of the control unit 90, thereby enabling display of an operation state of the injection molding machine 100. The signal lamp 80 may be, for example, a laminated signal lamp in which a plurality of signal lamps of different colors are provided. The signal lamp 80 may not be a laminated type, and may include a plurality of signal lamps provided in a horizontal direction. The signal lamp 80 may include signal lamps of the same color or one lamp. Incidentally, although an example where the signal lamp 80 is provided in an upper surface of the fixed safety cover 61 has been described, the position where the signal lamp 80 is attached is not limited thereto.

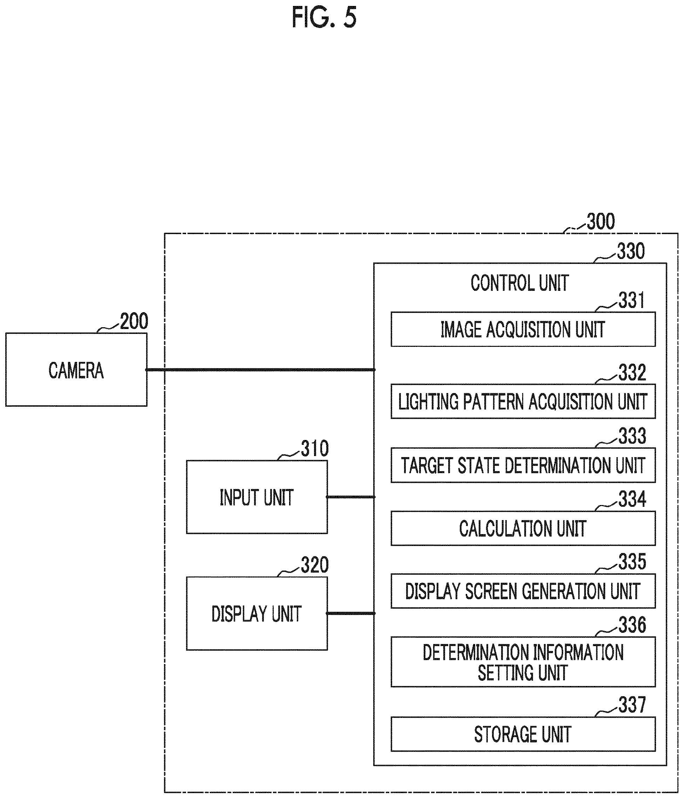

Fig. 2 is a functional block diagram of the control unit 90 of the injection molding machine 100. Each functional block shown in Fig. 2 (and Fig. 5 described below) is conceptual and does not necessarily need to be configured as shown physically. It is possible to configure all or some of the functional blocks by functionally or physically dispersing and integrating in any units. All or some of the processing functions performed in the functional blocks can be realized by a program executed by the CPU or can be realized as hardware by wired logic.

The control unit 90 includes a state acquisition unit 91, a lighting pattern decision unit 92, a signal lamp control unit 93, a lighting pattern setting unit 94, and a storage unit 95.

The state acquisition unit 91 acquires the operation state of the injection molding machine 100. The operation state of the injection molding machine 100 maybe divided into, for example, "in full automatic operation", "in semi-automatic operation", "in manual operation", "under stop", and "under temperature increase". Alternatively, the operation state of the injection molding machine 100 may be divided into "under setup", "in preparation", "in operation", "planned stop", and "unplanned stop".

The term "under setup" refers to, for example, a state in which replacement of a mold is on standby and a state in which a mold is replaced. The term "in preparation" refers to, for example, a state in which the injection molding machine 100 is operating for setting conditions or warming up. The term "in operation" refers to, for example, a state in which the injection molding machine 100 is operating. The term "planned stop" refers to, for example, a state in which the injection molding machine 100 is under operation stop after operation a predetermined number of times. The term "unplanned stop" refers to, for example, a state in which the injection molding machine 100 is stopped due to occurrence of an abnormality in the injection molding machine 100 or peripheral equipment before operation a predetermined number of times.

The lighting pattern decision unit 92 decides a lighting pattern of the signal lamp 80 based on the operation state of the injection molding machine 100 acquired by the state acquisition unit 91. In the storage unit 95, a lighting pattern table in which the operation state of the injection molding machine 100 is associated with the lighting pattern of the signal lamp 80 is stored. The lighting pattern indicates a state of turn-on, turn-off, blink, or the like of the signal lamp 80, and when the signal lamp 80 is constituted by laminating signal lamps of different colors, a state of turn-on, turn-off, blink, or the like is set for the signal lamp of each color. In this way, the lighting pattern decision unit 92 decides the lighting pattern of the signal lamp 80 based on the operation state of the injection molding machine 100 and the lighting pattern table stored in the storage unit 95.

The signal lamp control unit 93 performs control of turn-on, turn-off, blink, or the like of the signal lamp 80 based on the lighting pattern decided by the lighting pattern decision unit 92.

The lighting pattern setting unit 94 displays a setting screen of a lighting pattern on the display unit 72 of the input and display panel unit 70 according to an operation input of the operator through the input unit 71 of the input and display panel unit 70. The correspondence between the operation state and the lighting pattern input by the operator is stored as the lighting pattern table in the storage unit 95.

The storage unit 95 stores a program to be executed by the CPU, various tables, and the like. The lighting pattern table may be set in advance or may be arbitrarily set by the operator.

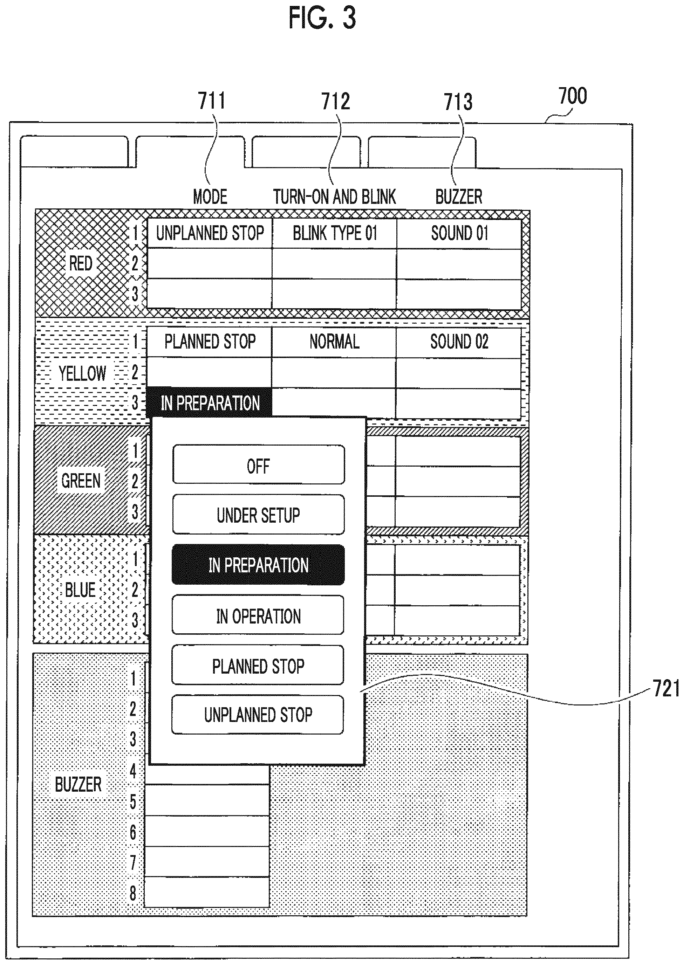

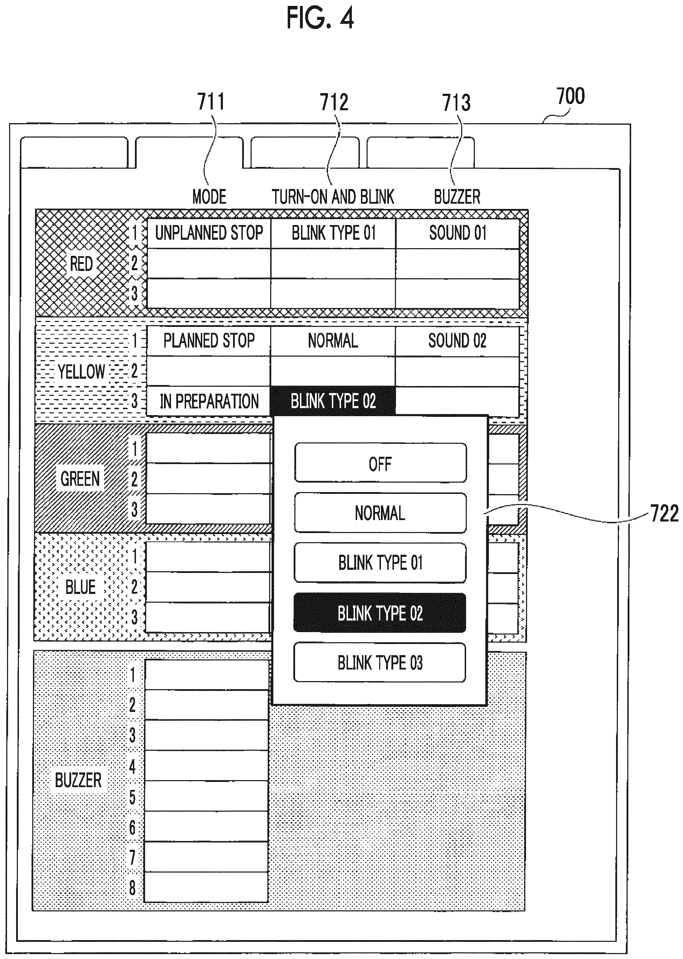

A method of setting the operation state of the injection molding machine 100 and the lighting pattern of the signal lamp 80 in association with each other will be described referring to Figs. 3 and 4. Figs. 3 and 4 are diagrams showing an example of a setting screen that is displayed on the display unit 72 of the injection molding machine 100 by the lighting pattern setting unit 94. In the example shown in Figs. 3 and 4, a case where the signal lamp 80 is constituted of four lamps of red, yellow, green, and blue is shown as an example.

A setting screen 700 is configured such that a mode 711 (the operation state of the injection molding machine 100) and turn-on and blink 712 of the signal lamp can be set in association with each other for each color of the signal lamp 8 0 . Furthermore, an operation of buzzer 713 can also be set. For example, a first row of red indicates that, when the operation state of the injection molding machine 100 is "unplanned stop", the red signal lamp is made to blink in a lighting pattern "blink type 01", and the buzzer is sounded with "sound 01" . A first row of yellow indicates that, when the operation state of the injection molding machine 100 is "planned stop", the yellow signal lamp is turned on in a lighting pattern "normal", and the buzzer is sounded with "sound 02".

As shown in Fig. 3, on the setting screen 700, an input cell of the mode 711 is selected, whereby a pop-up menu 721 having a list of selectable operation states appears. The operator selects a button of an operation state desired to set from the pop-up menu 721, thereby registering the selected operation state in the cell.

As shown in Fig. 4, on the setting screen 700, an input cell of the turn-on and blink 712 is selected, whereby a pop-up menu 722 having a list of selectable lighting patterns appears. The operator selects a button of a lighting pattern desired to set from the pop-up menu 722, thereby registering the selected lighting pattern in the cell. Though not shown, the buzzer 713 can be set in the same manner.

### Camera Device

Returning to Fig. 1, the camera device 200 is provided inside a facility where the injection molding machine 100 is provided, and is disposed such that an image of the signal lamp 80 of the injection molding machine 100 can be captured. The camera device 200 may be an optical camera or may be an infrared camera, and is not limited thereto. A video signal of the camera device 200 is transmitted to the host management device 300. The images of the signal lamps 80 of a plurality of injection molding machines 100 may be captured by one camera device 200.

In the embodiment, although an example where the camera device 200 that is an imaging device capturing an image of the operation of the signal lamp 80 is used as a signal lamp information acquisition device that acquires information relating to the operation of the signal lamp 80, the present invention is not limited thereto . The signal lamp information acquisition device is not limited to the camera device 200 and may be any device as long as the device acquires information relating to the

### operation of the signal lamp 80.

### Host Management Device

Fig. 5 is a functional block diagram of the host management device 300. The host management device 300 includes an input unit 310, a display unit 320, and a control unit 330.

The input unit 310 is connected to the control unit 330, receives an input operation of the operator, and outputs a signal according to the input operation to the control unit 330. The display unit 320 displays a state display screen or the like that displays the operation state of the injection molding machine 100, or the like under the control of the control unit 330. The operator operates the input unit 310 to display a requested display screen on the display unit 320.

The control unit 330 includes an image acquisition unit 331, a lighting pattern acquisition unit 332, a target state determination unit 333, a calculation unit 334, a display screen generation unit 335, a determination information setting unit 336, and a storage unit 337.

The image acquisition unit 331 acquires an image from the camera device 200.

The lighting pattern acquisition unit 332 acquires the lighting pattern of the signal lamp 80 in the injection molding machine 100 from the image acquired by the image acquisition unit 331. For example, in the storage unit 337, an image position table in which a position (coordinates) on the image is associated with identification information for identifying the injection molding machine 100 is stored. The lighting pattern acquisition unit 332 acquires color change at the position on the image based on the image position table, thereby acquiring lighting pattern of the signal lamp 80 of the injection molding machine 100 specified by the identification information. A determination method of the lighting pattern is not limited thereto, and the position of the signal lamp 80 may be specified by image recognition or the like and color change may be acquired to acquire the lighting pattern of the signal lamp 80 in the injection molding machine 100.

The target state determination unit 333 determines the operation state of the injection molding machine 100 based on the lighting pattern acquired by the lighting pattern acquisition unit 332. In the storage unit 337, a lighting pattern table in which the operation state of the injection molding machine 100 is associated with the lighting pattern of the signal lamp 80 is stored. The target state determination unit 333 determines the operation state of the injection molding machine 100 based on the lighting pattern acquired by the lighting pattern acquisition unit 332 and the lighting pattern table stored in the storage unit 337. The target state determination unit 333 stores the determined operation state of the injection molding machine 100 as logging data in the storage unit 337.

The calculation unit 334 calculates various management indexes to be displayed on the display unit 320 based on the logged operation state of the injection molding machine 100. As the management indexes to be calculated, for example, a proportion of the operation state for past 24 hours is calculated. As the management indexes, an operation rate, an operable rate, or the like may be calculated.

The display screen generation unit 335 generates a display screen to be displayed on the display unit 320.

The determination information setting unit 336 displays a setting screen of the lighting pattern on the display unit 320 according to an input operation of the operator through the input unit 310 and stores the correspondence between the operation state and the lighting pattern input by the operator as a lighting pattern table in the storage unit 337. The lighting pattern table stored in the storage unit 95 of the injection molding machine 100 is set to correspond to the lighting pattern table stored in the storage unit 337 of the host management device 300.

The determination information setting unit 336 displays a setting screen for setting an image position table and stores the correspondence between a position on an image and identification information for identifying the injection molding machine 100 input by the operator as an image position table in the storage unit 337.

The storage unit 337 stores a program to be executed by a CPU of the control unit 330, various tables, and the like. The lighting pattern table of the storage unit 95 of the injection molding machine 100 corresponds to the lighting pattern table of the storage unit 337 of the host management device 300. The settings (lighting pattern table) preset in the injection molding machine 100 and the host management device 300 may be used, the operator may input the settings to the injection molding machine 100 and the host management device 300, the settings (lighting pattern table) may be copied through an external storage device, or other methods may be used.

### Operation of Injection Molding Machine Management System

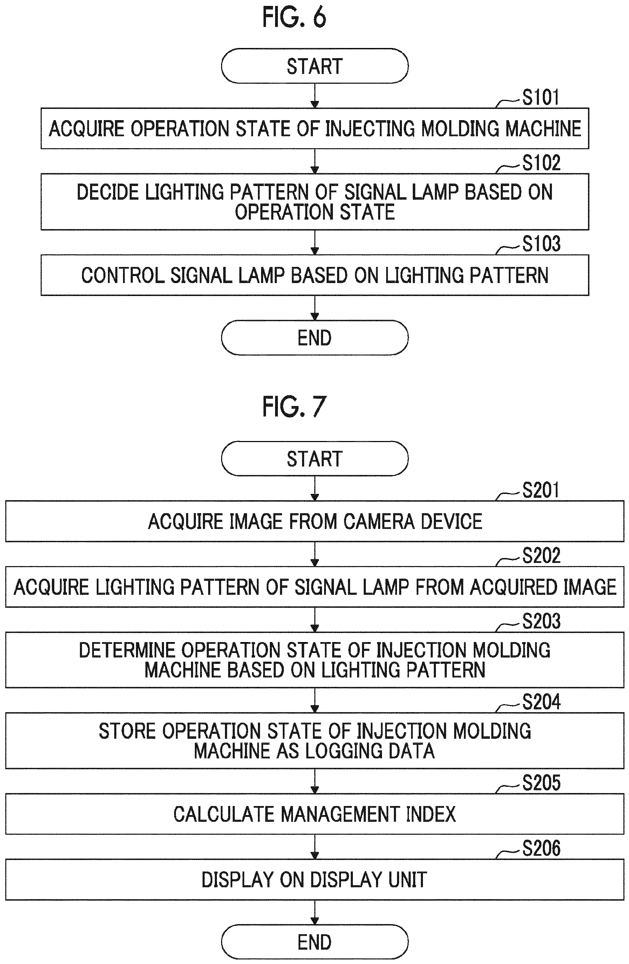

Next, the operation of the injection molding machine management system 400 will be described referring to Figs. 6 and 7. Fig. 6 is a flowchart of signal lamp control processing that is executed by the control unit 90 of the injection molding machine 100. In Step S101, the state acquisition unit 91 acquires the operation state of the injection molding machine 100. In Step S102, the lighting pattern decision unit 92 decides the lighting pattern of the signal lamp 80 based on the operation state of the injection molding machine 100 acquired by the state acquisition unit 91. In Step S103, the signal lamp control unit 93 performs control of turn-on, turn-off, blink, or the like of the signal lamp 80 based on the lighting pattern decided by the lighting pattern decision unit 92.

Fig. 7 is a flowchart of management processing that is executed by the control unit 330 of the host management device 300. In Step S201, the image acquisition unit 331 acquires an image from the camera device 200. In Step S202, the lighting pattern acquisition unit 332 acquires the lighting pattern of the signal lamp 80 in the injection molding machine 100 from the image acquired by the image acquisition unit 331. In Step S203, the target state determination unit 333 determines the operation state of the injection molding machine 100 based on the lighting pattern acquired by the lighting pattern acquisition unit 332. In Step S204, the target state determination unit 333 stores the determined operation state of the injection molding machine 100 as logging data in the storage unit 337. In Step S205, the calculation unit 334 calculates a management index based on the logged operation state of the injection molding machine 100. In Step S206, the display screen generation unit 335 generates a display screen and displays the generated display screen on the display unit 320.

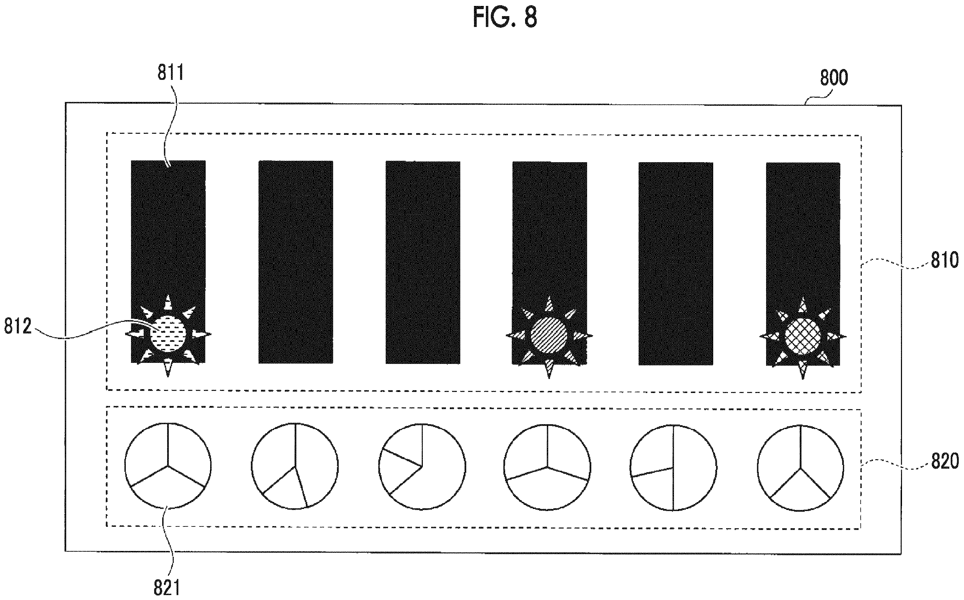

Fig. 8 is a diagram showing an example of a display screen that is displayed on the display unit 320 of the host management device 300. A display screen 800 has an operation state display region 810 where a current operation state of the injection molding machine 100 as a management target is displayed, and a management index display region 820 where the management index calculated by the calculation unit 334 is displayed.

In the operation state display region 810, a display region 811 corresponding to the injection molding machine 100 as a management target on a one-to-one basis is provided. When the lighting pattern acquisition unit 332 detects that the signal lamp 80 in the injection molding machine 100 is turned on, blinks, or the like, an icon 812 that reproduces the lighting pattern (color or turn-on and blink) of the signal lamp 80 is displayed. With such a configuration, a manager can confirm the current operation state of the injection molding machine 100 by viewing the display screen 800.

In the management index display region 820, management index information 821 calculated by the calculation unit 334 is displayed. In the example of Fig. 8, the proportion of the operation state for past 24 hours is shown by a pie chart as the management index information 821. With such a configuration, since the manager can ascertain the tendency of the operation state of the injection molding machine 100, the manager can use the tendency of the operation state for production management or maintenance management.

With the injection molding machine management system 400 according to the embodiment, it is possible to construct a management system that acquires the operation state of the injection molding machine 100 with a simple configuration. Furthermore, even though a communication cable for communication from the injection molding machine 100 to the host management device 300 is not provided, since the host management device 300 can acquire and manage the operation state of the injection molding machine 100, it is possible to reduce equipment cost for laying the communication cable. Furthermore, even though electromagnetic noise occurs when the injection molding machine 100, a device accompanied by the injection molding machine 100, or the like operates, since the operation state can be acquired from video of the camera device 200, it is possible to construct a management system having high noise resistance.

The host management device 300 may be connected to a communication line and may be configured to transmit the operation state or the management index to a portable information terminal, such as a smartphone. With this, even when the manager is at a remote location, the manager can manage the operation state of the injection molding machine 100.

The host management device 300 and the device accompanied by the injection molding machine 100 may be connected through a network and the accompanied device may be operated according to the operation state of the injection molding machine 100. With this, even in the injection molding machine 100 having no communication function, it is possible to control the operation of the accompanied device through the host management device 300.

Although an example in which the control unit 330 of the host management device 300 logs the operation state of the injection molding machine 100 determined by the target state determination unit 333 has been described, a configuration may be made in which the control unit 330 of the host management device 300 logs the lighting pattern of the signal lamp 80 in the injection molding machine 100 acquired by the lighting pattern acquisition unit 332.

An example in which the camera device 200 transmits the captured image to the host management device 300 has been described. The camera device 200 may include the function of the lighting pattern acquisition unit 332, and may transmit the acquired lighting pattern to the host management device 300. According to the invention, the camera device 200 includes the functions of the lighting pattern acquisition unit 332 and the target state determination unit 333, and transmits the operation state of the injection molding machine 100 to the host management device 300. With this, it is possible to reduce the amount of information to be transmitted from the camera device 200 to the host management device 300.

Although the embodiment and the like of the injection molding machine has been described above, the present invention is not limited to the above-described embodiment and the like, and various modifications and improvements may be made without departing from the scope of the present invention described in the claims.

### Brief Description of the Reference Symbols

400: injection molding machine management system
100: injection molding machine
70: input and display panel unit
80: signal lamp
90: control unit
91: state acquisition unit
92: lighting pattern decision unit
93: signal lamp control unit
94: lighting pattern setting unit
95: storage unit
200: camera device (signal lamp information acquisition device, imaging device)
300: host management device
310: input unit
320: display unit
330: control unit
331: image acquisition unit
332: lighting pattern acquisition unit
333: target state determination unit
334: calculation unit
335: display screen generation unit
336: determination information setting unit
337: storage unit

## Claims

1. An injection molding machine management system (400) comprising:
an injection molding machine (100) configured to operate a signal lamp (80) based on an operation state;
a signal lamp information acquisition device (200) configured to acquire information relating to the operation of the signal lamp (80) and including an imaging device (200) configured to capture an image of the operation of the signal lamp (80); and
a host management device (300) configured to acquire the operation state of the injection molding machine (100) based on the information sent by the signal lamp information acquisition device (200),
wherein the injection molding machine (100) includes
a state acquisition unit (91) configured to acquire the operation state,
a lighting pattern decision unit (92) configured to decide a lighting pattern of the signal lamp (80) based on the acquired operation state, and
a signal lamp control unit (93) configured to operate the signal lamp (80) in the decided lighting pattern,
**characterized in that** the imaging device (200) includes
a lighting pattern acquisition unit (332) configured to acquire the lighting pattern of the signal lamp (80), and
a target state determination unit (333) configured to determine the operation state of the injection molding machine (100) based on the acquired lighting pattern, and
the signal lamp information acquisition device (200) is configured to transmit the operation state of the injection molding machine (100) to the host management device (300).

2. The injection molding machine management system (400) according to claim 1,
wherein the host management device (300) includes
a storage unit (337) configured to store the operation state of the injection molding machine (100) determined by the target state determination unit (333) as logging data.

3. The injection molding machine management system (400) according to claim 2,
wherein the host management device (300) includes
a calculation unit (334) configured to calculate a management index based on the logging data.

4. The injection molding machine management system (400) according to any one of claims 1 to 3,
wherein the host management device (300) includes
a display unit (320) configured to display the operation state of the injection molding machine (100) determined by the target state determination unit (333).

## Patentansprüche

1. Spritzgießmaschinenverwaltungssystem (400), umfassend:
eine Spritzgießmaschine (100), die konfiguriert ist, eine Signalleuchte (80) basierend auf einem Betriebszustand zu betreiben;
eine Signalleuchte-Informationserfassungseinheit (200), die konfiguriert ist, Informationen in Bezug auf den Betrieb der Signalleuchte (80) zu erfassen, und eine Bildaufnahmevorrichtung (200) umfasst, die konfiguriert ist, ein Bild des Betriebs der Signalleuchte (80) aufzunehmen; und
eine Host-Verwaltungsvorrichtung (300), die konfiguriert ist, den Betriebszustand der Spritzgießmaschine (100) basierend auf den Informationen zu erfassen, die durch die Signalleuchte-Informationserfassungsvorrichtung (200) gesendet werden,
wobei die Spritzgießmaschine (100) umfasst
eine Zustandserfassungseinheit (91), die konfiguriert ist, den Betriebszustand zu erfassen,
eine Leuchtmusterbestimmungseinheit (92), die konfiguriert ist, ein Leuchtmuster der Signalleuchte (80) basierend auf dem erfassten Betriebszustand zu bestimmen, und
eine Signalleuchte-Steuerungseinheit (93), die konfiguriert ist, die Signalleuchte (80) in dem bestimmten Leuchtmuster zu betreiben,
**dadurch gekennzeichnet, dass**
die Bildaufnahmevorrichtung (200) umfasst
eine Leuchtmustererfassungseinheit (332), die konfiguriert ist, das Leuchtmuster der Signalleuchte (80) zu erfassen, und
eine Zielzustandsbestimmungseinheit (333), die konfiguriert ist, den Betriebszustand der Spritzgießmaschine (100) basierend auf dem erfassten Leuchtmuster zu bestimmen, und
die Signalleuchte-Informationserfassungseinheit (200) konfiguriert ist, den Betriebszustand der Spritzgießmaschine (100) an die Host-Verwaltungsvorrichtung (300) zu übertragen.

2. Spritzgießmaschinenverwaltungssystem (400) nach Anspruch 1,
wobei die Host-Verwaltungsvorrichtung (300) umfasst:
eine Speichereinheit (337), die konfiguriert ist, den Betriebszustand der Spritzgießmaschine (100), der durch die Zielzustandsbestimmungseinheit (333) bestimmt wird, als Protokolldaten zu speichern.

3. Spritzgießmaschinenverwaltungssystem (400) nach Anspruch 2,
wobei die Hostverwaltungsvorrichtung (300) umfasst:
eine Berechnungseinheit (334), die konfiguriert ist, einen Verwaltungskennwert basierend auf den Protokolldaten zu berechnen.

4. Spritzgießmaschinenverwaltungssystem (400) nach einem der Ansprüche 1 bis 3,
wobei die Host-Verwaltungsvorrichtung (300) umfasst:
eine Anzeigeeinheit (320), die konfiguriert ist, den Betriebszustand der Spritzgießmaschine (100), der durch die Zielzustandsbestimmungseinheit (333) bestimmt wird, anzuzeigen.

## Revendications

1. Un système de gestion de machine de moulage par injection (400) comprenant:
une machine de moulage par injection (100) configurée pour faire fonctionner une lampe de signalisation (80) sur la base d'un état de fonctionnement ;
un dispositif d'acquisition d'informations de lampe de signalisation (200) configuré pour acquérir des informations connexes au fonctionnement de la lampe de signalisation (80) et incluant un dispositif d'imagerie (200) configuré de manière à capturer une image du fonctionnement de la lampe de signalisation (80) ; et
un dispositif de gestion hôte (300) configuré pour acquérir l'état de fonctionnement de la machine de moulage par injection (100) sur la base des informations envoyées par le dispositif d'acquisition d'informations de lampe de signalisation (200) ;
dans lequel la machine de moulage par injection (100) inclut :
une unité d'acquisition d'état (91) configurée pour acquérir l'état de fonctionnement ;
une unité de décision de motif d'éclairage (92) configurée pour décider d'un motif d'éclairage de la lampe de signalisation (80) sur la base de l'état de fonctionnement acquis ; et
une unité de commande de lampe de signalisation (93) configurée pour faire fonctionner la lampe de signalisation (80) selon le motif d'éclairage décidé ;
**caractérisé en ce que**
le dispositif d'imagerie (200) inclut :
une unité d'acquisition de motif d'éclairage (332) configurée pour acquérir le motif d'éclairage de la lampe de signalisation (80), et
une unité de détermination d'état cible (333) configurée pour déterminer l'état de fonctionnement de la machine de moulage par injection (100) sur la base du motif d'éclairage acquis, et
le dispositif d'acquisition d'informations de lampe de signalisation (200) est configuré pour transmettre l'état de fonctionnement de la machine de moulage par injection (100) au dispositif de gestion hôte (300).

2. Le système de gestion de machine de moulage par injection (400) selon la revendication 1,
dans lequel le dispositif de gestion hôte (300) inclut :
une unité de stockage (337) configurée pour stocker l'état de fonctionnement de la machine de moulage par injection (100), déterminé par l'unité de détermination d'état cible (333), sous la forme de données de journalisation.

3. Le système de gestion de machine de moulage par injection (400) selon la revendication 2,
dans lequel le dispositif de gestion hôte (300) inclut :
une unité de calcul (334) configurée pour calculer un indice de gestion sur la base des données de journalisation.

4. Le système de gestion de machine de moulage par injection (400) selon l'une quelconque des revendications 1 à 3,
dans lequel le dispositif de gestion hôte (300) inclut :
une unité d'affichage (320) configurée pour afficher l'état de fonctionnement de la machine de moulage par injection (100), déterminé par l'unité de détermination d'état cible (333).
